# EUROPEAN PATENT APPLICATION

(11) **EP 1 898 132 A1**
(43) Date of publication of application: **12.03.2008**
(21) Application number: 06746780.3
(22) Date of filing: 24.05.2006
(51) Int. Cl.: F16J 15/32, F16C 33/78, F16C 33/80, F16J 15/447

(54) **SEALING DEVICE**

(30) Priority: 28.06.2005 JP 2005187961
(71) Applicant: NOK CORPORATION, Tokyo 105-8585 (JP)
(72) Inventor: KANZAKI, Go, c/o NOK CORPORATION, Fukushima-shi, Fukushima 9601102 (JP)
(74) Representative: TBK-Patent
(86) International application number: PCT/JP2006/310297
(87) International publication number: WO 2007/000861

(57) **Abstract**

A sealing device (1) formed by combining an inner peripheral sealing member (2) and an outer peripheral sealing member (3), where the inner peripheral sealing member (2) such as a slinger member is prevented from falling out in axially one direction from the outer peripheral sealing member (3) such as a lip seal member. The inner peripheral sealing member (2) has a metal ring (4) provided with a tubular section (4a) and a radially rising section (4b) integrally formed with the tubular section (4a) and extending radially outward from one end of the tubular section (4a). The outer peripheral sealing member (3) has side lips (7e, 7f) in slidable intimate contact with the radially rising section (4b) of the metal ring (4), and also has a radial lip (7g) provided without contact, on the outer peripheral side of the tubular section (4a) of the metal ring (4). The tubular section (4a) has an axial fall-out prevention section (8) having an outer diameter d₂ greater than the inner diameter d₁ of the radial lip (7g) and preventing the metal ring (4) from falling out in axially one direction from the outer peripheral sealing member (3).

## Description

### BACKGOUND OF THE INVENTION

### Field of the Invention

The present invention relates to a sealing device according to a sealing technology. For example, the sealing device of the present invention is used in a field related to an automobile as a hub bearing seal, or a general purpose machine.

### Description of the Conventional Art

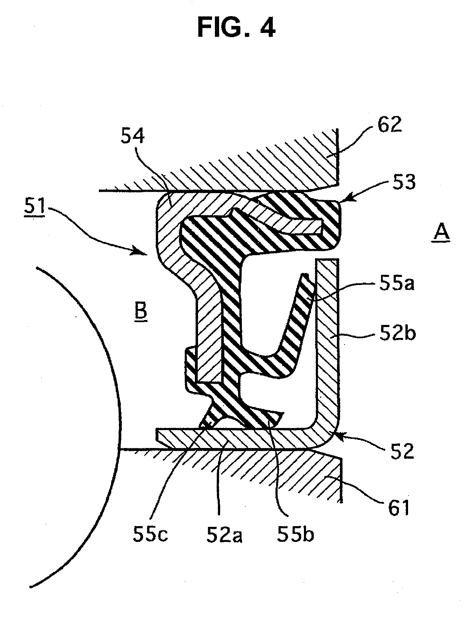

A sealing device 51 as illustrated in FIG. 4 has been conventionally known, and the sealing device 51 is constituted by combining a slinger member (an inner peripheral sealing member) 52 fitted to an inner peripheral fitting member (e.g., an inner ring) 61, which is one of relatively rotating two members (e.g., an inner ring and an outer ring of a bearing) 61 and 62, and a lip seal member (an outer peripheral sealing member) 53 fitted to peripheral fitting member (e.g., an outer ring) 62, which is the other of the two members.

The slinger member 52 is made of a metal material, is formed to have an approximately L-shaped cross section by being integrally formed with an annular radially rising section 52b at an axial one end of a tubular section 52a, and is fitted to an outer peripheral surface of the inner peripheral fitting member (e.g., an inner ring) 61 by the tubular section 52a. The lip seal member 53 is formed by covering a plurality of rubber-like elastic seal lips on a metal ring 54 also having an approximately L-shaped cross section, and is fitted to an inner peripheral surface of the outer peripheral fitting member (e.g., an outer ring) 62 by the metal ring 54. The seal lip is formed by combining a side lip 55a, a first radial lip 55b, and a second radial lip 55c. The side lip 55a is in slidably tight contact with an inner end surface of the radially rising section 52b of the slinger member 52. The first radial lip 55b is in slidably tight contact with an outer peripheral surface of the tubular section 52a of the slinger member 52. The second radial lip 55c is in slidably tight contact with an outer peripheral surface of the tubular section 52a of the slinger member 52. Among these tree lips, the side lip 55a and the first radial lip 55b are mainly to seal dusts, muddy water and the like in an outside A, and the second radial lip 55c is mainly to seal grease in an inside B, and thus these functions are shared.

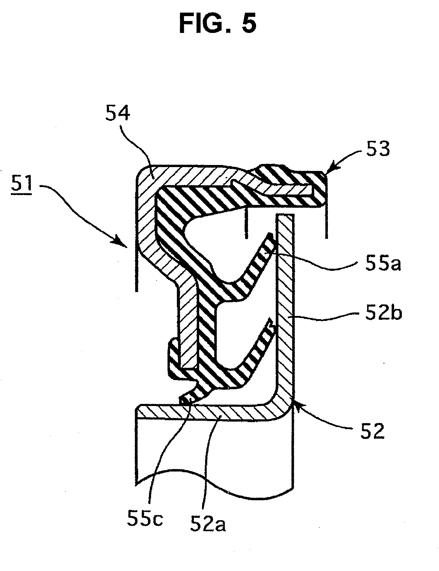

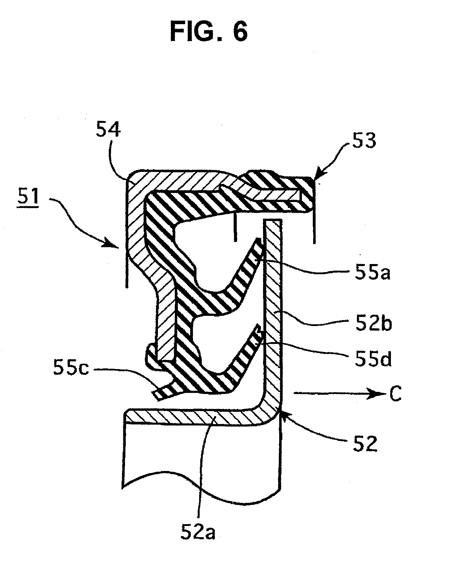

In the sealing device 51 constituted as above-mentioned, it can be considered that the number of the side lip 55a capable of largely improving muddy water resistance is made to be two (the first radial lip 55b is omitted, and a second side lip 55d is added instead of the first radial lip 55b) as illustrated in FIG. 5, in order to improve the muddy water resistance. However, when the number of the side lip 55a is made to be two, sliding torque may increase. Thus, as illustrated in FIG. 6, it can be also considered that the second radial lip 55c is made to be a non-contact type with respect to the slinger member 52.

However, when a combination of seal lips have a structure that the first side lip 55a is in slidably tight contact with an inner end surface of the radially rising section 52b of the slinger member 52, the second side lip 55d is in slidably tight contact with an inner end surface of the radially rising section 52b of the slinger member 52, and the radial lip 55c is provided in a state of non-contact with the outer peripheral side of the tubular section 52a of the slinger member 52, all these lips do not have a radial interference needed to hold the slinger member 52. Thus, at the time of transporting or mounting work of the sealing device 51, the slinger member 52 may be fallen off in axially one direction (a direction C in the figure) from the lip seal member 53.

Patent Document 1: Japanese Patent Application Laid Open No. 2005-83537 (FIG. 4)

### SUMMARY OF THE INVENTION

### Problems to be solved by the Invention

The present invention solves the above-described problems, and an objective of the present invention is to provide a sealing device capable of preventing falling off of an inner peripheral sealing member such as a slinger member in axially one direction from an outer peripheral sealing member such as a lip seal member. In addition, an objective of the present invention is to provide a sealing device capable of improving sealing ability.

### Means for solving the problems

In order to obtain the above-described objectives, according to a first aspect of the present invention, a sealing device is formed by combining an inner peripheral sealing member fitted to an inner peripheral fitting member, which is one of relatively rotating two members, and an outer peripheral sealing member fitted to an outer peripheral fitting member, which is the other of the two members, wherein the inner peripheral sealing member has a metal ring having a tubular section fixed to the inner peripheral fitting member, the outer peripheral sealing member has a radial lip provided in the state of non-contact with the outer peripheral side of the tubular section of the metal ring, and the tubular section of the metal ring has an axial fall-off prevention section having an outer diameter greater than an inner diameter of the radial lip to prevent the metal ring from falling off in axially one direction from the outer peripheral sealing member.

Further, according to a second aspect of the present invention, a sealing device is formed by combining an inner peripheral sealing member fitted to an inner peripheral fitting member, which is one of relatively rotating two members, and an outer peripheral sealing member fitted to an outer peripheral fitting member, which is the other of the two members, wherein the inner peripheral sealing member has a metal ring which has a tubular section fixed to the inner peripheral fitting member and a radially rising section integrally formed with the tubular section so as to extend radially outward from one end of the tubular section, the outer peripheral sealing member has a plurality of side lips in slidably tight contact with the radially rising section of the metal ring, and also has a radial lip provided in the state of non-contact with the outer peripheral side of the tubular section of the metal ring, and the tubular section of the metal ring has an axial fall-off prevention section having an outer diameter greater than an inner diameter of the radial lip to prevent the metal ring from falling off in axially one direction from the outer peripheral sealing member.

Further, according to a third aspect of the present invention, the sealing device according to the first or second aspect is structured such that the axial fall-off prevention section is formed by bending an end section of the tubular section of the metal ring radially outward.

Furthermore, according to a fourth aspect of the present invention, the sealing device according to the first, second or third aspect is structured such that a labyrinth seal having an improved labyrinth function is provided between the radial lip and the axial fall-off prevention section.

In the sealing device according to the first or second aspect of the present invention having the above-described constitution, the tubular section of the metal ring of the inner peripheral sealing member has the axial fall-off prevention section having an outer diameter greater than an inner diameter of the radial lip of the outer peripheral sealing member to prevent the metal ring from falling off in axially one direction from the outer peripheral sealing member. Thus, when the metal ring moves in axially one direction with respect to the outer peripheral sealing member, the axial fall-off prevention section engages with the radial lip, and thereby prevents falling off of the metal ring member. The axial fall-off prevention section is normally in non-contact with the radial lip. Further, the axial fall-off prevention section is preferably formed by bending an end section of the tubular section of the metal ring as described in the third aspect. In this case, the axial fall-off prevention section is integrally formed with the tubular section. Further, when the a labyrinth seal having an improved labyrinth function is provided between the radial lip and the axial fall-off prevention section as described in the fourth aspect, sealing ability between the radial lip and the axial fall-off prevention section can be improved by such labyrinth function of the labyrinth seal. The labyrinth function is improved by the structure that the radial lip and the axial fall-off prevention section are provided in non-contact state but closely to each other.

### Effectiveness of the Invention

The present invention has the following effects.

In the sealing device according the first or second aspect of the present invention, the tubular section of the metal ring of the inner peripheral sealing member has the axial fall-off prevention section having an outer diameter greater than an inner diameter of the radial lip of the outer peripheral sealing member to prevent the metal ring from falling off in axially one direction from the outer peripheral sealing member. Thus, the metal ring can be prevented to fall off in axially one direction from the outer peripheral sealing member by a fall-off prevention operation which the axial fall-off prevention section exerts. Therefore, at the time of transporting or mounting work of a sealing device, disassembling of the sealing device can be prevented beforehand.

In addition, in the sealing device according to the second aspect of the present invention, since the outer peripheral sealing member has a plurality of side lips, muddy water resistance can be improved. Further, since the seal lip is formed by combining a plurality of the side lips and the non-contact type radial lip, increase in sliding torque can be suppressed. Therefore, according to the invention of the second aspect, a sealing device with excellent muddy water resistance, with low sliding torque, and without disassembling of each section as described above can be provided in general.

Further, in the sealing device according to the third aspect of the present invention, since the axial fall-off prevention section is formed by bending an end section of the tubular section of the metal ring radially outward, the axial fall-off prevention section is integrally formed with the tubular section. Therefore, even when the axial fall-off prevention section is provided at the tubular section of the metal ring, increase of the number of sections of a sealing device can be suppressed.

Furthermore, in the sealing device according to the fourth aspect of the present invention, since the labyrinth seal having an improved labyrinth function is provided between the radial lip and the axial fall-off prevention section, the labyrinth seal exerts excellent sealing ability. Therefore, sealing ability between the radial lip and the axial fall-off prevention section can be improved.

### BRIEF EXPLANATION OF DRAWINGS

FIG. 1 is a cross sectional view of a main part of a sealing device according to an example of the present invention,
FIG. 2 is a cross sectional view of a main part of a sealing device according to another example of the present invention,
FIG. 3 is a cross sectional view of a main part of a sealing device according to another example of the present invention,
FIG. 4 is a cross sectional view to illustrate a mounting state of a conventional sealing device according to an example,
FIG. 5 is a cross sectional view of a main part of a conventional sealing device according to another example, and
FIG. 6 is a cross sectional view of a main part of a conventional sealing device according to another example.

### EXPLANATION OF SYMBOLS

- 1:: Sealing device
- 2:: Inner peripheral sealing member
- 3:: Outer peripheral sealing member
- 4:: Slinger member (metal ring)
- 4a, 6a:: Tubular sections
- 4b, 6b:: Radially rising sections
- 4c:: Thin cylindrical section
- 4d:: Stepped section
- 5:: Seal lip member
- 6:: Metal ring
- 7:: Rubber-like elastic body
- 7a:: Outer peripheral rubber section
- 7b:: Top end rubber section
- 7c:: Inner peripheral rubber section
- 7d:: End surface rubber section
- 7c, 7f:: Side lips
- 7g:: Radial lip
- 8:: Axial fall-off prevention section
- 8a:: Conical outer peripheral surface
- 8b:: Conical inner peripheral surface
- 9:: Small space section
- 10:: Labyrinth seal

### DETAILED DESCRIPTION OF PREFERRED EMBODIMENT

Examples of the present invention will be described below with reference to the drawings.

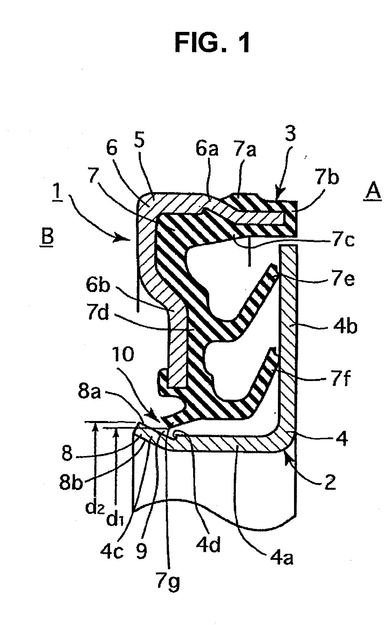

FIG. 1 is a cross sectional view of a main part of a sealing device 1 according to an example of the present invention. The sealing device 1 according to this example is used as a seal for a hub bearing (a hub seal) in a field related to an automobile, and has the following constitution.

The sealing device 1 has an inner peripheral sealing member 2 fitted to a bearing inner ring (an inner peripheral fitting member, not illustrated) and rotated with the bearing inner ring, where the bearing inner ring is one member of relatively rotating two members, and an outer peripheral sealing member 3 fitted to a bearing outer ring (an outer peripheral fitting member, not illustrated) and not rotated, where the bearing outer ring is the other member of the two members.

The inner peripheral sealing member 2 consists of a slinger member 4 (also simply called as a slinger below) which is a kind of a metal ring.

The slinger 4 is made of a metal material such as a metal plate. The slinger 4 is structured such that an annular radially rising section (a plane section) 4b is integrally formed on an end section at axially one side (the right side in the figures) of a tubular section 4a so as to extend radially outward (the upward direction in the figures). The slinger 4 is fitted to an outer peripheral surface of the bearing inner ring with the tubular section 4a.

On the other hand, the outer peripheral sealing member 3 consists of a lip seal member (also simply called as a lip seal below) 5. The lip seal member 5 is formed by combining a metal ring 6 and a rubber-like elastic body 7 attached (vulcanized and bonded) on the metal ring 6.

The metal ring 6 is made of a metal material such a metal plate. The metal ring 6 is structured such that an annular radially rising section (a plane section) 6b is integrally formed on an end section at axially another side (the left side in the figures) of a tubular section 6a so as to extend radially inward (the downward direction in the figure). The metal ring 6 is fitted to an inner peripheral surface of the bearing outer ring with the tubular section 6a.

The rubber-like elastic body 7 integrally has an outer peripheral rubber section 7a, a top end rubber section 7b, an inner peripheral rubber section 7c, an end surface rubber section 7d, a first side lip 7e, a second side lip 7f, and a radial lip 7g. The outer peripheral rubber section 7a is attached on a top end outer peripheral surface of the tubular section 6a of the metal ring 6. The top end rubber section 7b is attached on a top end surface of the tubular section 6a. The inner peripheral rubber section 7c is attached on an inner peripheral surface of the tubular section 6a. The end surface rubber section 7d is attached on an inner end surface and an inner peripheral end section of the radially rising section 6b of the metal ring 6. The first side lip 7e is supported by the end surface rubber section 7d and is in slidably tight contact with the inner end surface of the radially rising section 4b of the slinger 4. The second side lip 7f is provided at the inner peripheral side of the first side lip 7e, supported by the end surface rubber section 7d, and is in slidably tight contact with the inner end surface of the radially rising section 4b of the slinger 4. The radial lip 7g is supported by the end surface rubber section 7d and provided in the state of non-contact with the outer peripheral side of the tubular section 4a of the slinger 4. Among these three lips, the first and second side lips 7e and 7f are mainly to seal dusts, muddy water and the like in an outside A, and the radial lip 7g is mainly to seal grease in an inside B.

Further, an axial fall-off prevention section 8 is provided at an end of the tubular section 4a in the slinger 4. The axial fall-off prevention section 8 has an outer diameter d₂ greater than an inner diameter d₁ of the radial lip 7g to prevent the slinger 4 from falling off in axially one direction (the right direction in the figures) from the lip seal 5. The axial fall-off prevention section 8 is integrally formed with the tubular section 4a by bending an end section of the tubular section 4a radially outward. Further, the axial fall-off prevention section 8 is integrally formed with the tubular section 4a by bending an end section of the tubular section 4a obliquely and radiallyoutward. Thus, theaxialfall-off prevention section 8 is in a conical shape as the whole shape, and has a conical outer peripheral surface 8a and a conical inner peripheral surface 8b. Furthermore, the axial fall-off prevention section 8 is formed by providing a thin cylindrical section 4c at the end section of the tubular section 4a and bending the thin cylindrical section 4c obliquely and radially outward. Thus bending processing of the section 8 is facilitated. In addition, when the thin cylindrical section 4c is provided at the end section of the tubular section 4a, an annular stepped section 4d is formed on the outer peripheral surface of the tubular section 4a.

Further, a small space section 9 having a narrow flow passage width and a complicated flow passage shape is provided between the radial lip 7g and the axial fall-off prevention section 8. A labyrinth seal 10 having an improved labyrinth function is provided by the annular small space section 9.

In the sealing device 1 having the above-described constitution, the following operation effects are exerted.

An axial fall-off prevention section 8 having an outer diameter d₂ greater than an inner diameter d₁ of the radial lip 7g is provided at an end of the tubular section 4a in the slinger 4, to prevent the slinger 4 from falling off in axially one direction from the lip seal 5. Thus, the slinger 4 can be made not to fall off in axially one direction from the lip seal 5 by fall-off a preventing operation which the axial fall-off prevention section 8 exerts. Therefore, at the time of transporting or mounting work of the sealing device 1, disassembling of the sealing device 1 can be prevented beforehand.

Further, since the lip seal 5 is provided with a plurality of side lips 7e and 7f, the sealing device 1 can be improved in muddy water resistance. Furthermore, since the seal lip is formed by combining the plurality of side lips 7e and 7f and the non-contact type radial lip 7g, increase in the sliding torque of the all lips can be suppressed.

Further, since the axial fall-off prevention section 8 is formed by bending the end section of the tubular section 4a radially outward, it can be integrally formed with the tubular section 4a. Therefore, even when the axial fall-off prevention section 8 is provided at the tubular section 4a of the slinger 4, increase of the number of sections of the sealing device 1 can be suppressed.

Furthermore, since the labyrinth seal 10 having an improved labyrinth function is provided between the radial lip 7g and the axial fall-off prevention section 8, the labyrinth seal 10 exerts excellent sealing ability. Therefore, sealing ability between the radial lip 7g and the axial fall-off prevention section 8 can be improved.

In addition, in the present invention, the shape or structure of a sealing device is not limited to the above-described shape or structure, and may be a shape or structure in which falling off of the lip seal 5 and the slinger 4 can be prevented beforehand.

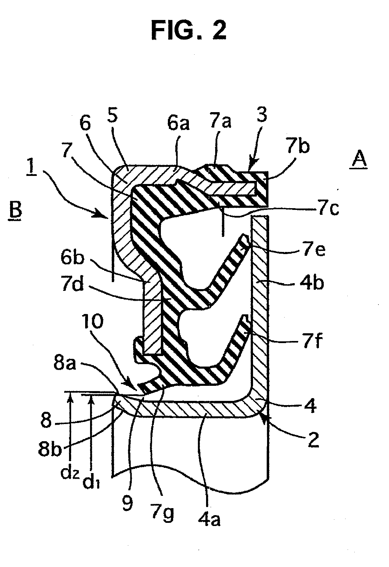

For example, in the above-described example, the axial fall-off prevention section 8 is formed by providing a thin cylindrical section 4c at the end section of the tubular section 4a and bending the thin cylindrical section 4c. However, as illustrated in FIG. 2, the axial fall-off prevention section 8 can be formed by bending the end section of the tubular section 4a as it is without providing the thin cylindrical section 4c.

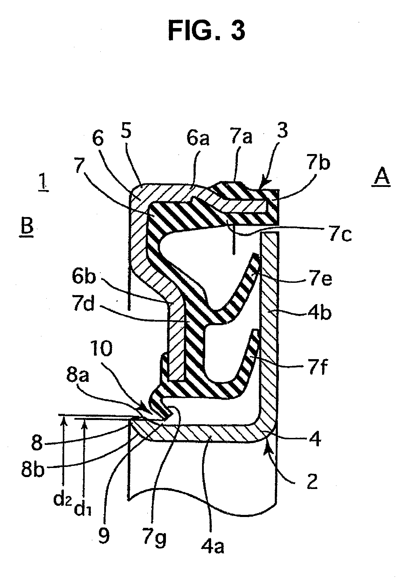

Further, in the above-described example, the direction of the radial lip (grease lip) 7g is made to be toward the inside B. However, as illustrated in FIG. 3, the direction may be toward the outside A, and the direction of the lip may be toward any of the inside and outside (if the lip can be prevented from reversing at the time of assembling and from falling off at the time of transporting).

Further, the shape of a slinger may preferable be a shape by which a lip is not damaged at the time of assembling. Furthermore, a rubber-like elastic body mixed with magnetic powders for detecting rotation may be provided at an end surface of a slinger so as to provide an encoder magnetized with a S-pole and a N-pole.

## Claims

1. A sealing device (1) formed by combining an inner peripheral sealing member (2) fitted to an inner peripheral fitting member, which is one of relatively rotating two members, and an outer peripheral sealing member (3) fitted to an outer peripheral fittingmember, which is the other of the two members,
wherein the inner peripheral sealing member (2) comprises a metal ring (4) having a tubular section (4a) fixed to the inner peripheral fitting member, the outer peripheral sealing member (3) comprises a radial lip (7g) provided in the state of non-contact with the outer peripheral side of the tubular section (4a) of the metal ring (4), and
the tubular section (4a) of the metal ring (4) comprises an axial fall-off prevention section (8) having an outer diameter (d₂) greater than an inner diameter (d₁) of the radial lip (7g) to prevent the metal ring (4) from falling off in axially one direction from the outer peripheral sealing member (3).

2. A sealing device (1) formed by combining an inner peripheral sealing member (2) fitted to an inner peripheral fitting member, which is one of relatively rotating two members, and an outer peripheral sealing member (3) fitted to an outer peripheral fitting member, which is the other of the two members,
wherein the inner peripheral sealing member (2) comprises a metal ring (4) having a tubular section (4a) fixed to the inner peripheral fitting member and a radially rising section (4b) integrally formed with the tubular section (4a) so as to extend radially outward from one end of the tubular section (4a),
the outer peripheral sealing member (3) comprises a plurality of side lips (7e) and (7f) in slidably tight contact with the radially rising section (4b) of the metal ring (4), and a radial lip (7g) provided in the state of non-contact with the outer peripheral side of the tubular section (4a) of the metal ring (4), and the tubular section (4a) of the metal ring (4) comprises an axial fall-of f prevention section (8) having an outer diameter (d₂) greater than an inner diameter (d₁) of the radial lip (7g) to prevent the metal ring (4) from falling off in axially one direction from the outer peripheral sealing member (3).

3. The sealing device as claimed in claim 1 or 2, wherein the axial fall-off prevention section (8) is formed by bending an end section of the tubular section (4a) of the metal ring (4) radially outward.

4. The sealing device as claimed in claim 1, 2 or 3,
wherein a labyrinth seal (10) having an improved labyrinth function is provided between the radial lip (7g) and the axial fall-off prevention section (8).
